# FASCICULE DE BREVET EUROPEEN

(11) **EP 1 493 255 B1**
(45) Date de publication et mention de la délivrance du brevet: **23.07.2008**
(21) Numéro de dépôt: 03740573.5
(22) Date de dépôt: 04.04.2003
(51) Int. Cl.: H04L 12/56

(54) **PROCEDE ET DISPOSITIF DE COMMUNICATION AVEC UN SYSTEME REDONDANT**
VERFAHREN UND VORRICHTUNG ZUR KOMMUNIKATION MIT EINEM REDUNDANTEN SYSTEM
METHOD AND DEVICE FOR COMMUNICATION WITH A REDUNDANT SYSTEM

(30) Priorité: 05.04.2002 FR 0204263
(43) Date de publication de la demande: 05.01.2005
(73) Titulaire: Thales, 92526 Neuilly Sur Seine (FR)
(72) Inventeur: BORNANT, Dominique Thales Intellectual Property, F-94117 Arcueil Cedex (FR)
(74) Mandataire: Lucas, Laurent Jacques
(86) Numéro de dépôt international: PCT/FR2003/001079
(87) Numéro de publication internationale: WO 2003/085905

(56) Documents cités:
- EP-A- 1 011 231
- WO-A-01/13555
- WO-A-95/29544

## Description

La présente invention concerne un procédé et un dispositif de communication avec un système redondant. Elle s'applique en particulier pour le traitement des informations de gestion du trafic aérien. Plus généralement, elle s'applique pour tout système routage de données numériques complexes nécessitant une grande sûreté de fonctionnement.

La densité du trafic aérien a atteint un niveau très important. Par ailleurs, les exigences de sécurité aériennes sont toujours de plus en plus accrues. Une conséquence de cette situation est que la gestion du trafic aérien doit traiter un grand nombre d'informations, destinées notamment aux contrôleurs aériens et aux pilotes d'avions. Ces informations sont en particulier relatives à une large catégorie de données radar, à des situations météorologiques, à des plans de vol ou encore à des données de type ILS concernant les systèmes d'atterrissage.

Un centre de contrôle aérien comprend généralement des moyens d'interfaçage, appelés aussi routeurs, dont une fonction principale est l'aiguillage des données vers le bon centre de destination. Ces routeurs peuvent être reliés à des stations de travail des contrôleurs aériens par l'intermédiaire d'un réseau local, tel que Ethernet. Ces routeurs peuvent être reliés d'autre part à des circuits de traitement par des lignes de transmission de données, telles que des lignes séries.

La sûreté de fonctionnement des systèmes informatiques est de toute première importance, puisque la sécurité des passagers est en jeu. A titre d'exemple, les normes de sécurité en vigueur imposent que la couverture aérienne d'un centre de contrôle de trafic aérien ne doit pas être interrompue plus de quelques secondes par an. Il est donc nécessaire de recourir à des techniques de redondance, c'est à dire en particulier dupliquer les équipements physiques du centre de contrôle, tels que les routeurs et les lignes de communication.

Un système redondant est un système comprenant des entités physiques dupliquées, formant des groupes d'entités physiques redondantes. Dans chaque groupe d'entités physiques redondantes, une entité physique est active, la ou les autres entités sont inactives. Des moyens de gestion de la redondance commandant le passage d'un état actif à inactif et réciproquement desdites entités physiques. Lorsqu'une entité active devient défaillante, l'une des entités inactive prend le relais et devient l'entité active. En pratique, la fonction de commande d'activation et d'inactivation est réalisée par des moyens de gestion de redondance. Ces moyens de gestion peuvent être dans un système tiers ou répartis entre les entités physiques redondantes. Le document FR 2 808 353 décrit des moyens de gestion répartis.

Vis à vis des applications qui communiquent avec un système redondant ou par l'intermédiaire d'un tel système, il est nécessaire de connaître quelles sont les entités actives. En effet, les informations doivent être acheminées vers les entités actives directement, les entités inactives étant non fonctionnelles. En particulier lorsqu'une entité active devient défaillante, l'application qui communiquait avec celle-ci ou par l'intermédiaire de celle-ci doit communiquer avec ou par l'intermédiaire de l'entité qui prend le relais (la nouvelle entité active). L'acheminement des données s'en trouve modifié.

De telles applications doivent surveiller le système redondant, et en particulier :
- lorsqu'elles démarrent connaître quelles sont les entités actives;
- lorsqu'une entité active devient défaillante, connaître quelle est la nouvelle entité active.

Le document WO-A-9529544 décrit un procédé de communication avec un système redondant dans lequel les entités redondantes sont des routeurs, faisant appel à une technique d'adressage virtuel.

Un but de l'invention est de simplifier le fonctionnement de telles applications, communiquant avec ou par l'intermédiaire d'un système redondant.

A cet effet, l'invention a notamment pour objet un procédé de communication avec un système redondant, ledit système comprenant au moins un groupe d'entités physiques redondantes, une entité physique dudit groupe étant une entité active, la ou les autres entités physiques dudit groupe étant des entités inactives, des moyens de gestion de la redondance commandant le passage d'un état actif à inactif et réciproquement desdites entités physiques, caractérisé en ce que :
- on alloue à chaque entité physique un identifiant physique;
- on alloue à chaque groupe d'entités physiques un identifiant logique;
- on communique avec les moyens de gestion pour déterminer les entités physiques actives ;
- on associe à chaque identifiant logique l'identifiant physique de l'entité active ;
- on transmet les messages d'une application vers le système redondant en substituant à chaque identifiant logique l'identifiant physique associé ;
- on transmet les messages du système redondant vers l'application en substituant à chaque identifiant physique l'identifiant logique associé.

Selon un mode de mise en oeuvre avantageux, les associations entre identifiant logique et idenfiant physique sont mémorisées dans une table de correspondance.

L'invention a aussi pour objet un dispositif de communication avec un système redondant, ledit système comprenant au moins un groupe d'entités physiques redondantes, une entité physique dudit groupe étant une entité active, la ou les autres entités physiques dudit groupe étant des entités inactives, des moyens de gestion de la redondance commandant le passage d'un état actif à inactif et réciproquement desdites entités physiques, caractérisé en ce qu'il comprend une application serveur et au moins une application client communiquant ensemble, dans lequel l'application serveur :
- alloue à chaque entité physique un identifiant physique ;
- alloue à chaque groupe d'entités physiques un identifiant logique;
- communique avec les moyens de gestion pour déterminer les entités physiques actives ;
- associe à chaque identifiant logique l'identifiant physique de l'entité active ;
- transmet les messages de l'application client vers le système redondant en substituant à chaque identifiant logique l'identifiant physique associé ;
- transmet les messages du système redondant vers l'application client en substituant à chaque identifiant physique l'identifiant logique associé.

Selon un mode de réalisation avantageux, l'application serveur communique avec plusieurs applications client d'une même station de travail.

Selon un mode de réalisation avantageux, l'application serveur fonctionne en permanence.

D'autres caractéristiques et avantages de l'invention apparaîtront à l'aide de la description qui suit faite en regard de dessins annexés qui représentent :
- la figure 1, un exemple de système redondant ;
- la figure 2, un exemple de système redondant relié à une station de travail par l'intermédiaire d'un réseau local de type Ethernet ;
- la figure 3, un exemple d'architecture logicielle selon l'invention qui permet à une application d'une station de travail, la station de travail étant reliée à un système redondant, de communiquer avec le système redondant ;
- la figure 4, un exemple de système redondant comportant plusieurs groupes d'entités physiques dupliquées, et relié à plusieurs stations de travail par l'intermédiaire d'un réseau local de type Ethernet.

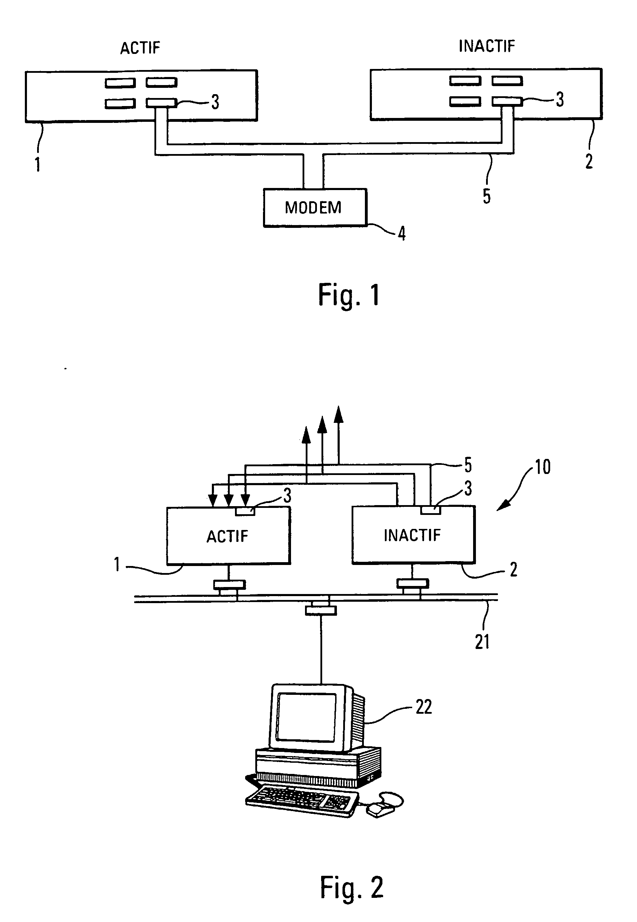

La figure 1 présente un exemple de système de routage redondant. Il comprend par exemple deux routeurs 1, 2 ayant les mêmes fonctions et comportant notamment les mêmes logiciels et mêmes fichiers de configurations. Un même port 3 de chaque routeur communique par une liaison série avec un même système 4, par exemple un modem. A cet effet, la liaison entre ce dernier et les deux routeurs se fait par un câble 5 en y. Lorsque les deux routeurs démarrent ensemble, un routeur 1 est actif et l'autre 2 est inactif. Le routeur 1 actif active ses modes électriques sur ses ports d'entrées/sorties 3, tandis que le routeur 2 inactif laisse ses ports 3 inactivés, c'est à dire à l'état de haute impédance. Des moyens de gestion de la redondance commandent le passage d'un état actif à inactif et réciproquement du groupe de routeurs 1, 2 redondant.

Ces routeurs 1, 2 peuvent être des matériels connus et notamment disponibles dans le commerce. A titre d'exemple on peut citer une gamme de produits connus par l'acronyme LINES issue de l'expression anglo-saxonne « Link Interface Node for External Systems ». Ces produits, de type modulaire, sont conçus pour permettre le routage et le traitement de messages d'entrée/sorties parmi des lignes séries entrantes ou sortantes et un Ethernet. Les lignes série standards telles que par exemple X25, HDLC ou BSC sont traitées aussi bien que des lignes dédiées, telles que par exemple des protocoles de transmissions d'informations radar particuliers.

Ces routeurs 1, 2 peuvent fonctionner selon un mode de communication ouvert, dit encore OCP selon l'expression anglo-saxonne « Open Communication Processor ». Dans ce mode, un routeur est en réseau, c'est à dire relié à plusieurs applications. Il fonctionne sensiblement comme un serveur de données. Il permet notamment d'aiguiller et de traiter les données depuis n'importe quel point d'entrée vers n'importe quel point de sortie. Ce mode de fonctionnement est particulièrement bien adapté à la gestion du trafic aérien. Dans une application de gestion du contrôle aérien, ce mode permet en effet notamment les fonctionnalités suivantes :
- une distribution de type boîte noire des données radar vers les centres, les données radar étant reçues par des interfaces séries et transmises via un réseau local, par exemple Ethernet, vers un groupe de machines identifiées, diffusion appelée « multicast » dans la littérature anglo-saxonne (UDP ou TCP) ;
- une conversion autonome de messages ou protocoles, permettant notamment la conversion de format de message ou protocoles spécifiques, ainsi par exemple ISR2 ou ASTERIX, X25, HDLC-UI... ;
- une fonction de contrôle de ligne dans les systèmes radar, c'est à dire la transmission de données radar par des lignes série vers les circuits de traitement.

La figure 2 illustre un exemple de système redondant 10 relié à une station de travail 22 par l'intermédiaire d'un réseau local 21, appelé LAN dans la littérature anglo-saxonne selon l'expression « Local Area Network », par exemple Ethernet. La station de travail 22 comprend une application client qui communique avec le système redondant.

Le système redondant 10 peut comprendre deux routeurs 1, 2, tels que ceux décrit en relation avec la figure 1. Les deux routeurs comportent les mêmes fonctions, et notamment les mêmes logiciels et les mêmes fichiers de configuration. Les entrées et sorties vers d'autres systèmes sont redondées.

Les deux routeurs 1, 2 sont par exemple reliés à d'autres systèmes par des liaisons série. Ces autres systèmes peuvent être des modem. Un câble en y 5 relie un même port 3 de chaque routeur à un même système, de façon notamment à ce que ces deux ports 3 puissent échanger avec ce système. Le routeur actif 1 a son port série activé, le routeur inactif 2 a son port série inactivé, en étant par exemple à l'état de haute impédance.

Avantageusement, les routeurs 1, 2 sont reliés l'un à l'autre par deux interfaces, le réseau local 21 et une ligne de sécurité (non représentée), et échangent mutuellement des messages d'interrogations par ces deux interfaces, un routeur étant considéré comme défaillant par l'autre routeur lorsqu'il n'émet aucun message dans un intervalle de temps donné sur au moins une des deux interfaces. Par conséquent, les moyens de gestion de redondance sont répartis entre les deux routeurs 1, 2.

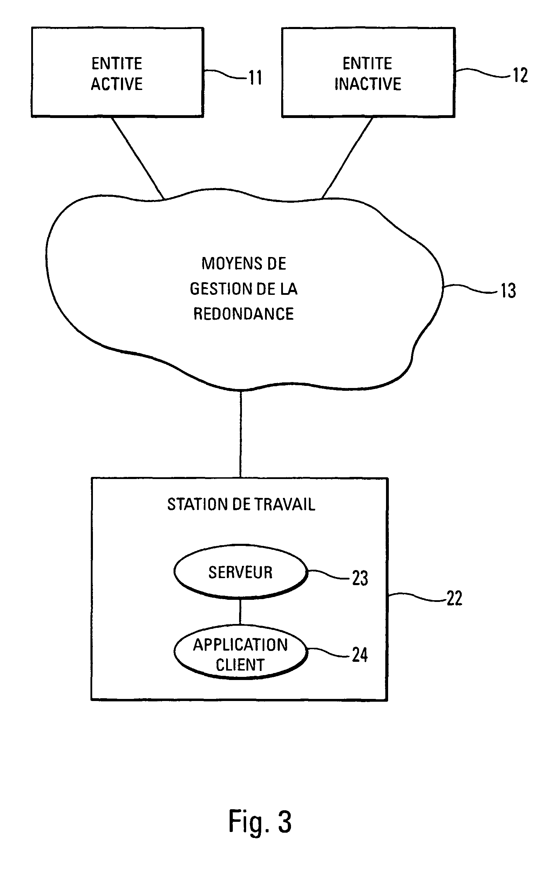

La figure 3 illustre un exemple d'architecture logicielle selon l'invention qui permet à une application 24 d'une station de travail 22, la station de travail étant reliée à un système redondant, de communiquer avec le système redondant.

Le système redondant peut être celui décrit en relation avec la figure 2. Il comprend des moyens de gestion de la redondance 13. L'application 24 communique avec une entité active 11. Cette entité 11 fait partie intégrante du système redondant. Cette entité peut être un routeur ou une ligne série par exemple. Cette entité est redondée. En d'autres termes, il existe au moins une entité inactive 12 qui peut être activée pour se substituer à l'entité active 11 initiale.

Les moyens de gestion de la redondance 13 déterminent quand une entité devient active ou inactive, et commandent le passage d'un état actif à inactif et réciproquement.

L'application 24 de la station de travail 22 peut fonctionner selon un mode client serveur. En d'autres termes, l'application 24 est une application client qui émet des requêtes à une application serveur 23. A cet effet l'application client 24 utilise des fonctions d'une interface applicative, appelée API dans la littérature anglo-saxonne selon l'expression « Application Programming Interface ».

L'application serveur 23 communique avec les moyens de gestion de la redondance 13. Dès son démarrage, l'application serveur est à l'écoute de messages de supervision. Les messages de supervision sont émis par les moyens de gestion de la redondance 13. Ces messages permettent de déterminer quelle entité d'un groupe d'entités physiques redondantes 11, 12 est active. En d'autres termes, l'application serveur 23 supervise les moyens de gestion de la redondance.

L'application serveur 23 alloue à chaque entité physique un identifiant unique, appelé identifiant physique. Elle alloue en outre à chaque groupe d'entités physiques redondantes un identifiant unique, appelé identifiant logique. Elle associe à chaque identifiant logique l'identifiant physique de l'entité active. Cette association peut être mémorisée dans une table de correspondance.

Par exemple, le groupe d'entité redondante peut avoir un identifiant logique « A », l'entité active 11 l'identifiant physique « A1 », l'entité inactive 2 l'identifiant physique « A2 ». L'association « A correspond à A1 » est mémorisée dans la table de correspondance.

Lorsque l'application client 24 émet des données vers le système redondant :
- l'application client envoie un message en donnant l'identifiant logique « A » à une fonction de l'API de l'application serveur ;
- l'application serveur reçoit ce message ;
- l'application serveur scrute sa table de correspondance et substitue à l'identifiant « A » l'identifiant physique « A1 » associé;
- l'application serveur achemine ce message vers l'entité active 11, c'est à dire celle identifiée par « A1 ».

Lorsque l'application client 24 reçoit des données du système redondant :
- un message est émis par l'entité active 11 sur un lien actif ;
- l'application serveur reçoit ce message et connaît l'identifiant « A1 » de l'émetteur;
- l'application serveur scrute sa table de correspondance et substitue à l'identifiant physique « A1 » l'identifiant logique « A » associé ;
- l'application serveur transmet le message à l'application en lui indiquant l'identifiant logique « A » de l'émetteur.

Par conséquent, si l'entité inactive 12 devient la nouvelle entité active, l'application client 24 émettra et recevra les mêmes messages que si l'entité active était restée la même. En d'autres termes, l'application client 24 n'utilise qu'un identifiant logique quelle que soit la destination. L'application serveur 23 joue le rôle d'une interface de communication entre le système redondant et l'application client. Cette interface rend totalement transparente la redondance du système vis à vis de l'application. Il n'est pas nécessaire de superviser l'ensemble des entités physiques du système redondant à chaque démarrage de l'application client, car cette fonction est réalisée par l'application serveur. Ceci simplifie la programmation et le fonctionnement des applications client, et diminue le risque d'erreur de routage.

Avantageusement, une seule application serveur 23 peut communiquer avec plusieurs applications client 24 d'une même station de travail. L'application serveur peut fonctionner en permanence pour mettre à jour la table de correspondance.

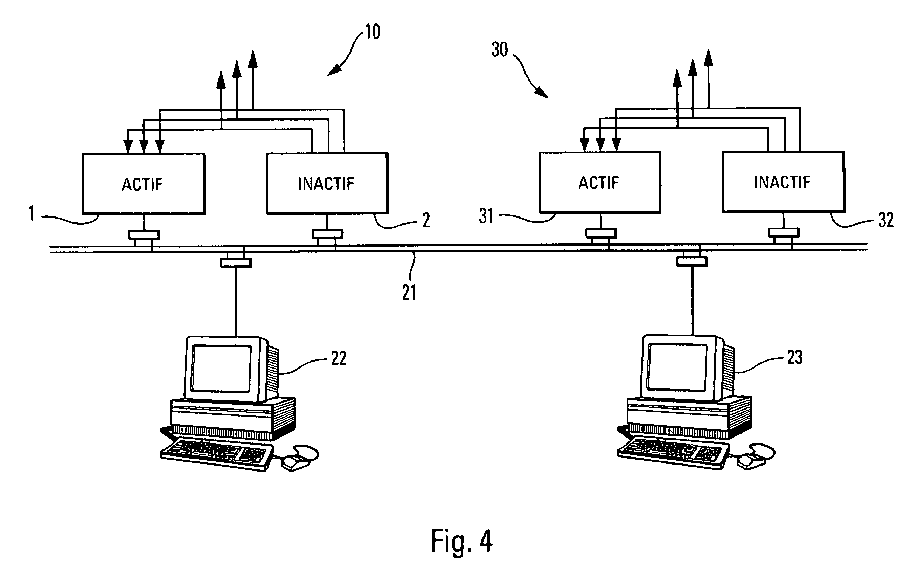

La figure 4 illustre un exemple de système redondant comportant plusieurs groupes 10, 30 d'entités physiques dupliquées, et relié à plusieurs stations de travail 22, 23 par l'intermédiaire d'un réseau local de type Ethernet.

Les principes exposés s'appliquent directement. La table de correspondance comprend deux identifiants logiques, c'est à dire un identifiant logique par groupe. A chaque entité physique (active ou non) 1, 2, 31, 32 on associe un identifiant physique.

Il peut y avoir une application serveur sur chaque station de travail 22, 23. Ainsi, les applications client de ces stations de travail peuvent communiquer avec toute entité physique active du système redondant.

## Revendications

1. Procédé de communication avec un système redondant, ledit système comprenant au moins un groupe (10) de lignes série (1, 2) redondantes, une ligne série (1) dudit groupe étant une ligne active, la ou les autres lignes séries (2) dudit groupe étant des lignes inactives, des moyens de gestion de la redondance (13) commandant le passage d'un état actif à inactif et réciproquement desdites lignes séries, **caractérisé en ce que :**
- on alloue à chaque ligne série un identifiant physique ;
- on alloue à chaque groupe de lignes séries un identifiant logique ;
- on communique avec les moyens de gestion pour déterminer les lignes séries actives;
- on associe à chaque identifiant logique l'identifiant physique de la ligne série active;
- on transmet les messages d'une application vers le système redondant en substituant à chaque identifiant logique l'identifiant physique associé:
- on transmet les messages du système redondant vers l'application en substituant à chaque identifiant physique l'identifiant logique associé.

2. Procédé communication selon la revendication 1 **caractérisé en ce que,** les associations entre identifiant logique et identifiant Physique sont mémorisées dans une table de correspondance.

3. Dispositif de communication avec un système redondant, ledit système comprenant au moins un groupe (10) de lignes séries (1, 2) redondantes, une ligne série (1) dudit groupe étant une ligne active, la ou les autres lignes séries (2) dudit groupe étant des lignes inactives, des moyens de gestion de la redondance (13) commandant le passage d'un état actif à inactif et réciproquement desdites lignes séries, **caractérisé en ce qu'**il comprend une application serveur (23) et au moins une application client (24) communiquant ensemble, dans lequel l'application serveur comprend :
- des moyens pour allouer à chaque ligne série un identifiant physique ;
- des moyens pour allouer à chaque groupe de lignes séries un identifiant logique;
- des moyens pour communiquer avec les moyens de gestion pour déterminer les lignes séries actives ;
- des moyens pour associer à chaque identifiant logique l'identifiant physique de la ligne active ;
- des moyens pour transmettre les messages de l'application client vers le système redondant en substituant à chaque identifiant logique l'identifiant physique associé ;
- des moyens pour transmettre les messages du système redondant vers l'application client en substituant à chaque identifiant physique l'identifiant logique associé.

4. Dispositif de communication selon la revendication précédente, **caractérisé en ce que** l'application serveur (23) communique avec plusieurs applications client (24) d'une même station de travail (22).

5. Dispositif de communication selon l'une quelconque des revendications 3 à 4, **caractérisé en ce que** l'application serveur fonctionne en permanence.

## Claims

1. Process for communication with a redundant system, said system comprising at least one group (10) of redundant serial lines (1, 2), a serial line (1) of said group being an active line, the other serial line or lines (2) of said group being inactive lines, means for managing the redundancy (13) controlling the switching of said serial lines from an active to an inactive state and vice versa, **characterized in that :**
- each serial line is allocated a physical identifier ;
- each group of serial lines is allocated a logical identifier;
- the management means are communicated with in order to determine the active serial lines ;
- the physical identifier of the active serial line is associated with each logical identifier ;
- the messages of an application are transmitted to the redundant system, substituting each logical identifier with the associated physical identifier ;
- the messages of the redundant system are transmitted to the application, substituting each physical identifier with the associated logical identifier.

2. Communication process according to Claim 1, **characterized in that** the associations between logical identifier and physical identifier are stored in a correspondence table.

3. Device for communication with a redundant system, said system comprising at least one group (10) of redundant serial lines (1, 2), a serial line (1) of said group being an active line, the other serial line or lines (2) of said group being inactive lines, means for managing the redundancy (13) controlling the switching of said serial lines from an active to an inactive state and vice versa, **characterized in that** it comprises a server application (23) and at least one client application (24) communicating together, in which the server application comprises :
- means for allocating a physical identifier to each serial line ;
- means for allocating a logical identifier to each group of serial lines ;
- means for communicating with the management means in order to determine the active serial lines ;
- means for associating the physical identifier of the active line with each logical identifier ;
- means for transmitting the messages of the client application to the redundant system, substituting each logical identifier with the associated physical identifier ;
- means for transmitting the messages of the redundant system to the client application, substituting each physical identifier with the associated logical identifier.

4. Device for communication according to the preceding claim, **characterized in that** the server application (23) communicates with several client applications (24) of one and the same workstation (22).

5. Device for communication according to either of Claims 3 and 4, **characterized in that** the server application operates continuously

## Patentansprüche

1. Verfahren zur Kommunikation mit einem redundanten System, wobei das System mindestens eine Gruppe (10) von redundanten seriellen Leitungen (1, 2) aufweist, wobei eine serielle Leitung (1) der Gruppe eine aktive Leitung ist, dort, wo die anderen seriellen Leitungen (2) der Gruppe inaktive Leitungen sind, Mittel zur Steuerung der Redundanz (13), die den Übergang von einem aktiven in einen inaktiven Zustand und umgekehrt der seriellen Leitungen steuert, **dadurch gekennzeichnet, dass:**
- jeder seriellen Leitung eine physikalische Kennung zugeordnet ist;
- jeder Gruppe von seriellen Leitungen eine logische Kennung zugeordnet ist;
- mit den Steuermitteln kommuniziert wird, um die aktiven seriellen Leitungen festzulegen;
- jeder logischen Kennung die physikalische Kennung der aktiven seriellen Leitung zugeordnet ist;
- die Meldungen einer Anwendung zu dem redundanten System übertragen werden, indem jede logische Kennung durch die zugeordnete physikalische Kennung ersetzt wird;
- die Meldungen des redundanten Systems zu der Anwendung übertragen werden, indem jede physikalische Kennung durch die zugeordnete logische Kennung ersetzt wird.

2. Kommunikationsverfahren nach Anspruch 1, **dadurch gekennzeichnet, dass** die Zuordnungen zwischen logischer Kennung und physikalischer Kennung in einer Entsprechungstabelle gespeichert sind.

3. Vorrichtung zur Kommunikation mit einem redundanten System, wobei das System mindestens eine Gruppe (10) von redundanten seriellen Leitungen (1, 2) aufweist, wobei eine serielle Leitung (1) der Gruppe eine aktive Leitung ist, dort, wo die anderen seriellen Leitungen (2) der Gruppe inaktive Leitungen sind, Mittel zur Steuerung der Redundanz (13), die den Übergang von einem aktiven in einen inaktiven Zustand und umgekehrt der seriellen Leitungen steuern, **dadurch gekennzeichnet, dass** sie eine Server-Anwendung (23) und mindestens eine Client-Anwendung (24), die miteinander kommunizieren, aufweist, bei der die Server-Anwendung Folgendes aufweist:
- Mittel, um jeder seriellen Leitung eine physikalische Kennung zuzuordnen;
- Mittel, um jeder Gruppe von seriellen Leitungen eine logische Kennung zuzuordnen;
- Mittel, um mit den Steuermitteln zu kommunizieren, um die aktiven seriellen Leitungen festzulegen;
- Mittel, um jeder logischen Kennung die physikalische Kennung der aktiven Leitung zuzuordnen;
- Mittel, um die Meldungen der Client-Anwendung zu dem redundanten System zu übertragen, indem jede logische Kennung durch die zugeordnete physikalische Kennung ersetzt wird;
- Mittel, um die Meldungen des redundanten Systems zu der Client-Anwendung zu übertragen, indem jede physikalische Kennung durch die zugeordnete logische Kennung ersetzt wird.

4. Kommunikationsvorrichtung nach dem vorhergehenden Anspruch, **dadurch gekennzeichnet, dass** die Server-Anwendung (23) mit mehreren Client-Anwendungen (24) desselben Arbeitsplatzrechners (22) kommuniziert.

5. Kommunikationsvorrichtung nach einem der Ansprüche 3 bis 4, **dadurch gekennzeichnet, dass** die Server-Anwendung ständig in Betrieb ist.
